# EUROPEAN PATENT APPLICATION

(11) **EP 4 345 618 A1**
(43) Date of publication of application: **03.04.2024**
(21) Application number: 22198607.8
(22) Date of filing: 29.09.2022
(51) Int. Cl.: G06F 9/50, G05B 19/042

(54) **SYSTEM, METHOD AND TEMPLATE FOR MANAGING VIRTUAL CONTROL UNITS IN AN INDUSTRIAL AUTOMATION FACILITY**

(71) Applicant: Siemens Aktiengesellschaft, 80333 München (DE)
(72) Inventor: Becker, Stefan, 91325 Adelsdorf (DE); Falk, Rainer, 85586 Poing (DE); Feist, Christian Peter, 80689 München (DE); Hofmann, Klaus-Peter, 91086 Aurachtal-Münchaurach (DE)
(74) Representative: Siemens Patent Attorneys

(57) **Abstract**

A system, template and method of managing virtual control units (VCN1, VCN2, VCN3) in an industrial automation facility are disclosed. The industrial automation facility comprises a plurality of machines (130, 140, 150), each machine configured to perform one or more steps of at least one industrial process. The method comprising: generating one or more templates comprising one or more deployment criteria for the virtual control units (VCN1, VCN2, VCN3), each of the virtual control units (VCN1, VCN2, VCN3) capable of controlling at least one of the plurality of machines (130, 140, 150); mapping the virtual control units (VCN1, VCN2, VCN3) to one or more compute nodes (CN) based on the deployment criteria, wherein the virtual control units (VCN1, VCN2, VCN3) are instantiated on the mapped compute nodes (CN) when the controlled machines are in operation; and validating that the instantiation of the virtual control units (VCN1, VCN2, VCN3) is in accordance with the templates using an attestation, wherein the attestation confirms one or more determined deployment parameters after deployment of the virtual control units (VCN1, VCN2, VCN3), wherein the plurality of machines (130, 140, 150) perform the industrial process, according to control commands received from at least one of the virtual control units (VCN1, VCN2, VCN3), when the virtual control units (VCN1, VCN2, VCN3) are validly instantiated.

## Description

The present invention relates to an industrial automation facility. Particularly, the present invention relates to managing virtual control units that control industrial processes performed in the industrial automation facility.

In the automation industry, automation functions such as machine control, diagnostic functions, project planning functions are increasingly being implemented virtually using software/virtual control units. Accordingly, the automation functions of a machine are not integrated into the machine as an independent hardware component, rather they are implemented software-based in a compute environment outside the actual machine.

An operator of an industrial automation facility may use production machines from different manufacturers. The individual manufactures can pursue different approaches to realize a control of the machines. Managing operation of the machines irrespective of the manufactures is challenging when the software controlling the machine is provided separately from the hardware.

There is therefore a need to manage the virtual control units of different machines in the industrial automation facility.

The object of the present invention is to provide a reliable and flexible industrial automation facility by managing virtual control units that control machines in the industrial automation facility. Further, it is an object to ensure high availability and integrity of industrial automation facility while supporting dynamic reconfiguration of the machines in the industrial automation facility.

The object of the present invention is achieved by the claims disclosed hereinbelow.

In an example of the present invention, the object of the present invention is achieved by a method of managing virtual control units in an industrial automation facility, wherein the industrial automation facility comprises a plurality of machines, each machine configured to perform one or more steps of at least one industrial process, the method comprising generating one or more templates comprising one or more deployment criteria for the virtual control units, each of the virtual control units capable of controlling at least one of the plurality of machines mapping the virtual control units to one or more compute nodes based on the deployment criteria, wherein the virtual control units are instantiated on the mapped compute nodes when the controlled machines are in operation; and validating that the instantiation of the virtual control units is in accordance with the templates using an attestation, wherein the attestation confirms one or more determined deployment parameters after deployment of the virtual control units, wherein the plurality of machines perform the industrial process, according to control commands received from at least one of the virtual control units, when the virtual control units are validly instantiated.

In another example, the object is achieved by a software artifact for managing virtual control units in an industrial automation facility, wherein the industrial automation facility comprises a plurality of machines configured to perform at least one industrial process, and wherein the software artifact is implemented as the one or more templates disclosed herein, the templates comprising: identifiers of the virtual control units, wherein the virtual control units are capable of controlling the plurality of machines or a subset of the plurality of machines; and deployment criteria for the virtual control units, wherein the virtual control units are instantiated on compute nodes when the plurality of machines are in operation, and wherein each of the plurality of machines perform one or more steps of the industrial process when the virtual control unit is validly instantiated in accordance with the template.

In another example, the object of the present invention is achieved by an industrial automation facility, wherein the industrial automation facility comprises a plurality of machines, each machine configured to perform one or more steps of at least one industrial process, the system comprising: one or more processing units communicatively coupled to one or more memory units comprising instructions executed by the processing units, the instructions stored in a template module configured to generate at least one template comprising one or more deployment criteria of the virtual control units capable of controlling at least one of the plurality of machines; a deployment manager module configured to map the virtual control units to one or more compute nodes, wherein the virtual control units are instantiated on the mapped compute nodes when the controlled machines are in operation; and a deployment verification module configured to validate that the instantiation of the virtual control units is in accordance with the template using an attestation, wherein the attestation confirms one or more deployment parameters after deployment of the virtual control units and wherein the plurality of machines perform the industrial process when the virtual control units are validly instantiated.

In another example, the object of the present invention is achieved by a machine in an industrial automation facility configured to perform an industrial process in collaboration with other machines in the industrial automation facility, wherein the machine comprises: sensors and actuators that enable execution of one or more steps of the industrial process when the machine is in operation; input/output interfaces to communicate with the sensors and actuators; one or more memory units comprising instructions stored as modules, the memory units comprising a template module configured to generate at least one template comprising one or more deployment criteria of a virtual control unit capable of controlling the machine, wherein the virtual control unit is instantiated on a compute node based on the deployment criteria when the machine is in operation; and a processing unit to generate control signals that control the actuators when the virtual control unit associated with the machine is instantiated.

In yet another example, the object is achieved by a computer readable medium having machine-readable instructions stored therein, which when executed by a processing unit, cause the processing unit to perform steps according to the method disclosed herein.

Before describing the invention in more detail, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments. It should also be appreciated that features explained in the context of the suggested method may also be comprised by the suggested system by appropriately configuring and adapting the system and vice versa.

As used herein "industrial automation facility" refers to a facility that for manufacture, production that may be semi or completely automated. For example, industrial automation facility may include laboratory facility, building facility, a manufacturing facility, and the like. The industrial automation facility may also refer to a combination of the aforementioned facilities.

The characteristic of an industrial automation facility is that it includes machines that are cyber-physical devices.

The machines individually perform a part of an industrial process. Examples of the industrial process may include painting a body of an automobile, assembling an automobile or a part of an automobile, manufacturing a chemical compound, transporting material in a warehouse, etc.

The industrial automation facility includes machines such as a machine tool, a mobile robot, a driverless transport system, etc. The machines are computer-controlled machines and are controlled by virtual control units. The virtual control units refer to machine readable instructions that are executed on a compute infrastructure separate from the machines. A virtual control unit may be considered to belong to a machine if it realizes a control function for that machine. A person skilled will appreciate that the one or more virtual control units may be linked to a single machine for its operation. In addition to sending commands to the machine to control the machine, measurements from the machine would be sent to the linked virtual control unit/s. Therefore, the functions of the machines are performed when the virtual control units are executed. The functions of the virtual control units include automation functions such as machine control, in some embodiments the virtual control units are also used to perform diagnostic functions, project planning functions.

The present invention proposes a deployment template for the Virtual Control Units (VCN). Through the present invention content of the VCNs are made coherent in the sense that together they provide an automation functionality of one or more machines. The individual VCNs can be run on different compute servers, e.g. in a local edge cloud or in a backend cloud. The deployment template disclosed in the present invention enables determination of the suitable compute resource required to execute an individual VCN. The present invention enables operator of the industrial automation facility to automatically instantiate the VCNs dynamically and reliably. Further, the present invention enables a machine builder who develops and markets the machines in the industrial automation facility to define operating conditions of the machines using the deployment template. Therefore, the present invention advantageously enables dynamic reconfiguration of the machines for a flexible and reliable industrial automation facility.

The method of managing VCNs in the industrial automation facility comprises generating one or more templates comprising one or more deployment criteria for the virtual control units, each of the VCNs capable of controlling at least one of the plurality of machines. The deployment criteria may provide class of compute nodes on which the VCNs are instantiated. Further, the deployment criteria may also include template data flows between the VCNs. The template data flows can be defined based on at least one of rate of data flow from the VCNs, real-time communication requests from the VCNs, and data packet parameters of data packets transmitted between the VCNs. The template specifies which VCN is linked to a machine and also provides criteria for which deployment of the VCN of the linked machine is permitted. By generating deployment templates, the present invention advantageously provides reliable and automated deployment of the VCNs.

The method includes mapping the VCNs to one or more compute nodes based on the deployment criteria, wherein the VCNs are instantiated on the mapped compute nodes when the controlled machines are in operation. The deployment criteria not only links the VCN to a machine also determines how and which compute nodes execute the VCN. Therefore, the supplier of the machine can ensure reliable operation of the machine by determining how the VCN linked to the machine is executed.

The method may include balancing load on the mapped compute nodes based on the deployment criteria provided by the template. One method of balancing the load is by balancing the deployment of the VCNs across compute nodes based on the data sensitivity. In an embodiment, the method may include determining from the deployment criteria whether the VCNs are to be instantiated on local compute nodes in a local network within the industrial automation facility and/or external compute nodes in an external network and mapping the VCNs to the local compute nodes and/or external compute nodes based on the determination. By selectively deploying the VCNs on local compute nodes, sensitive data of the linked machines and the industrial process stays within the industrial automation facility. Further, the local compute nodes are not burdened with the computing requirements of VCNs that are not associated with sensitive data and/or do not need real-time execution.

In another embodiment, the templates may provide a prioritization criterion in addition to the deployment criteria. The prioritization criteria defines whether a VCN is to be deployed on a compute node with real-time capability. The balancing of the load may be performed based on the prioritization criteria. Accordingly, the method may further include balancing the load on the mapped compute nodes based on prioritization criteria provided in the template, wherein the load is adjusted between the local compute nodes and the external compute nodes based on the prioritization criteria.

The method may also include generating an integrated deployment template for the industrial process by merging the templates of at least two or more the virtual control units, wherein the integrated deployment template specifies a global deployment criterion for the virtual control units on a common compute infrastructure, wherein the common compute infrastructure comprises at least one of the local compute nodes and the external compute nodes. Using the templates an operator of the industrial automation facility can automatically instantiate the VCNs of a machine on appropriate compute nodes that are associated with the industrial automation facility. For the performance of the industrial process multiple templates may need to be merged for the linked machines to work together to perform the process. Therefore, the integrated deployment template provides the global deployment criterion I.e., a global policy that specifies how to deploy the VCNs of different machines on the compute nodes of a common compute infrastructure.

In an embodiment, the integrated deployment template may be generated using simulation. The method may accordingly include simulating the templates of the virtual control units by testing the deployment criteria of each of the templates; determining the global deployment criteria using the simulation results; merging the templates according to the global deployment criteria, wherein the global deployment criteria ensures fulfillment of the deployment criteria in each of the templates.

The method further includes validating that the instantiation of the virtual control units is in accordance with the templates using an attestation, wherein the attestation confirms one or more determined deployment parameters after deployment of the virtual control units, wherein the plurality of machines perform the industrial process, according to control commands received from at least one of the virtual control units, when the virtual control units are validly instantiated. In a scenario where the deployment of the VCNs is automatically performed, the present invention ensures that such automatic deployment is validly made in accordance with the templates. By validating the deployment parameters, the present invention ensures that the integrity of the industrial automation facility is maintained.

In an embodiment, the validation is performed based on flow of data between VCNs. Also, the validation is performed based on flow of data in the local network and the external network. The method may accordingly include determining data flows between the virtual control units by a network monitoring module; detecting at least one deviation in the data flows in comparison with template data flows provided in at least one of the templates and the integrated deployment template.

In an embodiment, the attestation is based on cryptographic techniques and protocols. The attestation of the deployment may be a cryptographically protected data structure that confirms that the deployment parameters match the associated VCNs' deployment templates. The attestation may be a verifiable credential. For example, the deployment may be a digitally signed confirmation of the deployment parameter. In another embodiment, the attestation may be performed by determining ramp-up parameters of the machines that are controlled by the VCNs that have been deployed.

If the deployment parameters are not validated, the method may further include generating an emergency halt signal to stop the plurality of machines or a subset of the plurality of machines from performing the industrial process in the industrial automation facility when the deviation is detected. The method may also include determining that a machine of the plurality of machines is not permitted to operate when a virtual control unit controlling the machine is not instantiated in accordance with the template. Accordingly, the present invention recognizes that an incorrect deployment of a VCN result in incorrect functioning of the linked machine/s. If the linked machine is already in operation, then the emergency halt signal is used to stop operation. Otherwise, the machine is prevented from initializing. Therefore, the present invention maintains the integrity of the industrial process and ensures a safe industrial automation facility.

The industrial automation facility may be managed using planning and scheduling management systems, such Manufacturing Execution Systems. The attestation can be further analyzed to modify the planning and scheduling of the industrial automation facility. Accordingly, generating a production planning schedule for the plurality of machines based on the attestation of the instantiation of the VCNs. By linking the outcome of the attestation to the Manufacturing Execution Systems dynamic management of the industrial automation facility can be achieved. For example, tasks of a production order can then be assigned to machines for which a validation is present, or an attestation is available.

The management of the VCNs is achieved by the templates. Accordingly, the present invention includes a software artifact for managing virtual control units in an industrial automation facility, wherein the industrial automation facility comprises a plurality of machines configured to perform at least one industrial process, and wherein the software artifact is implemented as the one or more templates herein, the templates comprising identifiers of the VCNs; and deployment criteria for the VCNs, wherein the virtual control units are instantiated on compute nodes when the plurality of machines are in operation, and wherein each of the plurality of machines perform one or more steps of the industrial process when each of the VCNs are validly instantiated in accordance with the template.

The software artifact may further include map of the virtual control units and associated compute node class, wherein the compute node class determines one or more compute nodes on which the virtual control units are instantiated, wherein the compute node class is defined based at least on location of the compute nodes and type of the compute nodes; and template data flows between the virtual control units, wherein the template data flows are defined based on at least one of rate of data flow from the virtual control units, real-time communication requests from the virtual control units, and data packet parameters of data packets transmitted between the virtual control units.

In certain scenarios, the industrial automation facility is managed using a system. The system is also capable of managing the VCNs. The system includes one or more processing units communicatively coupled to one or more memory units comprising instructions executed by the processing units, the instructions stored in a template module configured to generate at least one template comprising one or more deployment criteria of the virtual control units capable of controlling at least one of the plurality of machines. The system also includes a deployment manager module configured to map the virtual control units to one or more compute nodes, wherein the virtual control units are instantiated on the mapped compute nodes when the controlled machines are in operation. Further, the system includes a deployment verification module configured to validate that the instantiation of the virtual control units is in accordance with the template using an attestation, wherein the attestation determines one or more deployment parameters after deployment of the virtual control units and wherein the plurality of machines perform the industrial process when the virtual control units are validly instantiated.

In an embodiment, the processing units of the system are configured to execute the steps of the method disclosed herein.

The industrial automation facility includes at least one machine. The machine can be configured to implement the present invention. The machine comprises sensors and actuators that enable execution of one or more steps of the industrial process when the machine is in operation. The machine further comprises input/output interfaces to communicate with the sensors and actuators. The machine also includes one or more memory units comprising instructions stored as modules, the memory units comprising a template module configured to generate at least one template comprising one or more deployment criteria of a virtual control unit capable of controlling the machine, wherein the virtual control unit are instantiated on compute nodes based on the deployment criteria when the machine is in operation. The machine also includes a processing unit to generate control signals that control the actuators when the virtual control unit associated with the machine is instantiated. When the VCN is validly instantiated, the processing unit generates control signals to the actuators whereby one or more steps of the industrial process is executed. When the VCN is incorrectly instantiated, the processing unit generates an emergency signal to stop operation of the machine. If the VCN is not validly instantiated, the processing unit may also generate a negative start-up signal to ensure that the machine does not start until the VCN is validly instantiated.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the scope of the disclosure in its broadest form.

Below, the invention is described using the embodiments illustrated in the figures.
- Fig. 1: illustrates an industrial automation facility, according to an embodiment of the present invention;
- Fig. 2: illustrates an architecture for managing the industrial automation facility, according to an embodiment of the present invention; and
- Fig. 3: illustrates a method for managing virtual control units in an industrial automation facility, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth to provide a thorough understanding of one or more embodiments. It may be evident that such embodiments may be practiced without these specific details.

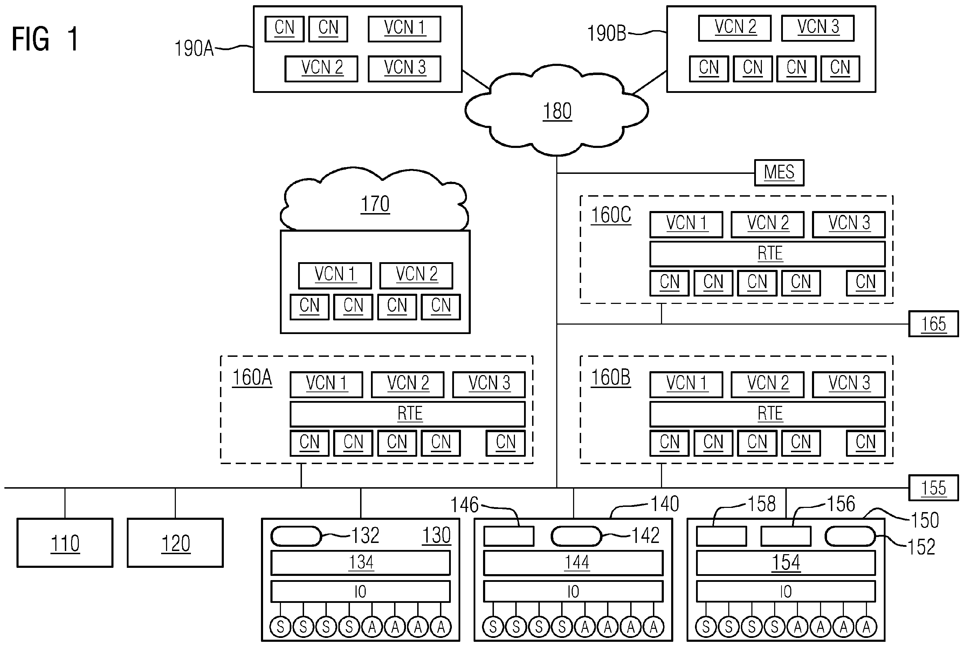

Fig. 1 illustrates an industrial automation facility, according to an embodiment of the present invention. The industrial automation facility includes machines 130, 140 and 150 to perform one or more industrial processes. The machines 130, 140 and 150 are communicatively coupled to computing resources 160A and 160B via an automation network 155. The machines 130, 140 and 150 are communicatively coupled to computing resource 160C via an enterprise network 165. The computing resources 160A and 160B are edge computing platforms within the industrial automation facility, with compute nodes having real-time and non-real-time computational capability.

The industrial automation facility comprises the machines 130, 140, 150, the communication networks 155 and 165 and the computing resources 160A-C. The industrial automation facility is communicatively coupled to proprietary and non-proprietary wireless networks 170 and 180, respectively. For example, the wireless network 170 includes 5G Multi Access Edge Computing (5G/MEC) network. MEC, i.e., multi-access edge computing, refers to the computing performed at the devices on the edge of any network. 5G/MEC refers to a mobile edge computing that provides computing resources by a 5G mobile network. Another example of a wireless network is the Internet 180. Via the Internet 180, the industrial automation facility is communicatively coupled to Cloud Computing resources 190A and 190B. The computing resources 160A-C, 170 and 190A-B include compute nodes CN on which virtual control units VCN1, VCN2 and VCN3 are deployed.

The advantage of the present invention is that the industrial automation facility further includes a Deployment Management (DM) Module 110 and a Deployment Verification (DV) Module 120. The DM Module 110 and DV Module 120 are communicatively coupled to the machines 130, 140 and 150 and the computing resources 160A-C, 170 and 190A-B.

Fig. 1 illustrates an application of the present invention with the machines 130, 140 and 150 in the industrial automation facility. The machines 130, 140 and 150 each have a processing unit 134, 144 and 154, respectively. In addition, the machines 130, 140 and 150 have Input/Output interface IO to sensors S and actuators A. The control and monitoring of the machines 130, 140 and 150 is carried out by the virtual control units VCN1, VCN2 and VCN3. To enable deployment of the VCNs VCN1-VCN3, the machines 130, 140 and 150 include Deployment Template (DT) Modules 132, 142 and 152, respectively. Further, the machines 140 and 150 may optionally include Deployment Management Modules 146 and 156, respectively. Furthermore, the machine 150 may optionally include a Deployment Verification Module 158.

When the machines 130, 140 and 150 are put into operation, the VCNs linked to the respective machine must also be instantiated in an appropriate manner i.e. in accordance with the templates/deployment templates provided by the DT Module 132, 142 and 152. For example, VCN1 is linked to machine 130. Accordingly, when machine 130 is in operation VCN1 must be deployed according to the deployment template provided by DT Module 132. The deployment template may provide that the VCN 1 must be deployed in the respective computing resource with compute nodes CN. Further, the deployment template specifies requirements of a machine and criteria for which deployment of the linked VCN. For example, the requirement for the machine 140 is real-time deployment of the linked VCN2. Accordingly, the VCN2 is to be deployed in on compute nodes CN in the computing resource 160A.

In an embodiment, the template includes details of the VCNs referenced by one or more identifiers, Hash and/or Signer (VCN Image). For each VCN i.e. VCN1, VCN2 and VCN3, the template includes indication of where this can be instantiated. Examples of this include requirements of the Compute Node CN, such as technical requirements including 8 Cores, 32 GB RAM, etc; network latency requirements, hyperscaler restrictions based on service provider.

The template also includes requirements between VCNs (VCN1, VCN2, VCN3). For example, the requirements may be that VCNs must be executed on the same class of compute nodes or VCNs must not be executed on the same node or VCN must be executed on a local network node (e.g. compute nodes on compute resources 160A and 160B within automation network 155) or VCN must be instantiated on a real-time compute node or on a safety-approved compute node. The requirements mentioned hereinabove are collectively referred to as deployment criteria. The template therefore includes deployment criteria for the VCNs.

The template may include a map/list of the VCNs and associated compute node class. The compute node class determines one or more compute nodes on which the VCNs are to be instantiated based on the above-mentioned criteria. wherein the compute node class is defined based at least on location of the compute nodes and type of the compute nodes.

The template may further include the data flows between the VCNs and/or between a VCN and one of the machines 130-150. The data flows are defined based on data rate, real-time requests and traffic descriptors for the detection of the corresponding network data packets, (e.g. IP header, protocol, port numbers, HTTP header). The template includes indicators reflecting the computational demand. Accordingly, the data flows may further be defined based on requirements for RAM memory, storage memory, compute performance, the type of computing environment e.g., Linux native, container, VM, trusted execution environment and resources available at the compute node, e.g., TPM secure element, inference engine, graphics accelerator, crypto accelerator, safety watchdog.

The DM Module 110 and optionally DM Modules 146 and 156 is configured to map the VCN of a machine (e.g. VCN1 of machine 130) to the compute resource. For this purpose, the deployment templates provided by DT Modules 132, 142 and 152 include configuration information disclosing the class of the compute node and requirement of the machine. In another embodiment, the mapping of the VCN1 to the compute nodes CN can be automatically assigned by detecting the available compute nodes using a discovery procedure.

After assignment of the compute nodes CN is performed, DV Module 120 and optionally DV Module 158 are configured to check the actual deployment of the VCNs of linked to the machines 130, 140 and 150. The check is performed in comparison with the deployment template generated by the DT Modules 132, 142 and 152. Depending on this, a machine ramp-up can be released. Alternatively, a cryptographically protected deployment attestation can be provided to the processing units 134, 144 and 154 of the machines 130, 140 and 150. The deployment attestation is a cryptographically protected data structure that confirms that the deployment matches the associated deployment template. For example, it can be digitally signed or in the form of a verifiable credential.

The DM Module 110 and the DV Module 120 can be integrated in the machines 130, 140, 150 (as shown in machine 150) or implemented separately from it. They can be implemented locally in the automation network 155. In addition, they can also be implemented as an app or as a web service. The DM and DV applications may be downloadable by the machines 130, 140, 150 or an industrial controller configured to manage the industrial automation facility.

The industrial process in the industrial automation facility is performed when the machines 130, 140 and 150 are operated according to a predetermined policy. This orchestration of the machines 130, 140 and 150 is achieved using the DM Module 110. The DM Module 110 is configured to generating an integrated deployment template for the industrial process by merging the templates of VCN1, VCN2 and VCN3. The integrated deployment template specifies a global deployment criterion for the VCN1, VCN2 and VCN3 on the common compute infrastructure 160A, 160B, 160C, 170, 190A and 190B. As seen in Fig. 1, the common compute infrastructure comprises the local compute nodes CN of compute resources 160A, 160B, 160C and 170 and the external compute nodes of compute resources 190A and 190B.

To generate the integrated deployment template, the DM Module 110 is configured to simulate the templates of the virtual control units by testing the deployment criteria of each of the templates. The outcome of the simulation are simulation results that predict the behavior of the machines 130, 140 and 150 when the associated VCNs are deployed in accordance with the associated deployment template. The global deployment criteria is determined using the simulation results. Further, the DM Module 110 is configured to merge the templates according to the global deployment criteria, wherein the global deployment criteria ensures fulfillment of the deployment criteria in each of the templates. In addition, the global deployment criteria ensures performance of the industrial process.

In an embodiment, deployment verification results from the DV module 120 may be transmitted to a production planning system, e.g. a Manufacturing Execution System. The Manufacturing Execution System MES is configured to generate production tasks of a production order, which is assigned to the machines 130, 140, 150 based on the deployment verification results. In an example, the deployment verification results may be in the form of a valid, attestation. Accordingly, a work order can be selected from several upcoming production orders, which can be carried out with the machines 130, 140, 150 for which a valid attestation is available.

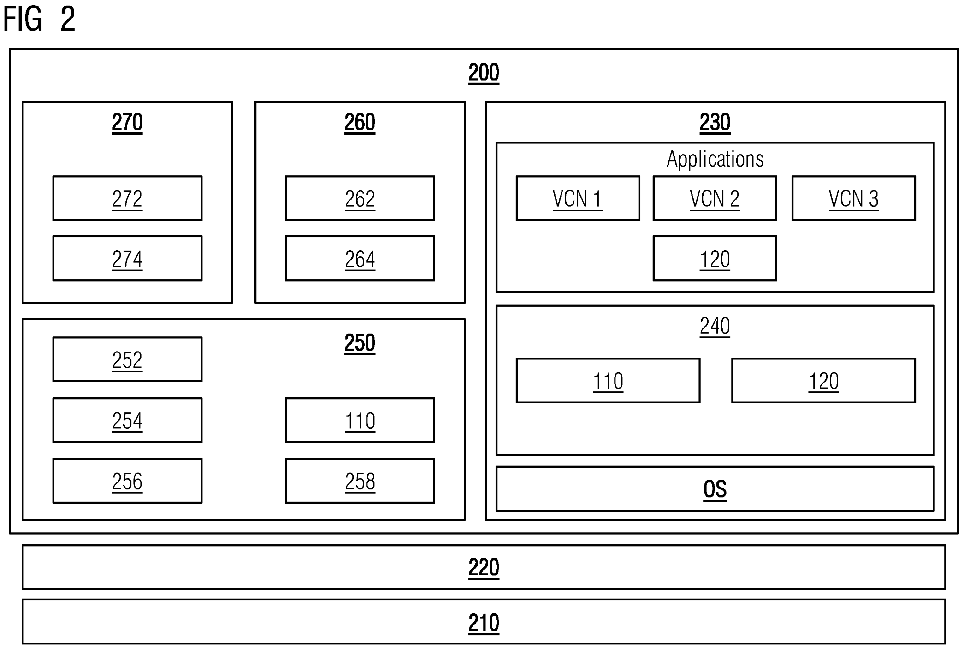

Fig. 2 illustrates an architecture 200 for managing the industrial automation facility disclosed in Fig. 1, according to an embodiment of the present invention. The architecture reflects an open automation ecosystem which serves as a foundation for software-defined automation. The characteristics of the open automation ecosystem is that the compute resources 160A, 160B, 160C, 170, 190A and 190B enable central management of the industrial automation facility. Further, the industrial automation facility is operated based on open standards. When the industrial automation facility is operated based on open standards, it enables enhancements or customizability by end users. Examples of industrial automation facilities with open automation ecosystem include a modular manufacturing facility, a warehouse using Automated Guided Vehicles (AGVs), an autonomous factory, etc.

In Fig. 2 actuators and sensors of the machines 130, 140 and 150 are illustrated as actuator and sensor layer 210. The actuator and sensor layer 210 interacts with virtualized machines 220 for the machines 130, 140 and 150. The virtualized machines 220 interact with the architecture 200.

The architecture 200 includes an Open Automation Runtime (OAR) 230. The OAR 230 includes an Operating System OS. The OS may be standard Linux^{™} based OS with real-time extension.

Other examples include an industrial PC OS such as Windows^{™} based OS. The OAR 230 further includes Runtime Applications and Runtime services 240. The Runtime Applications provide containerized environment for VCN1, VCN2 and VCN3 to be deployed. Further, in certain embodiments the Deployment Verification module 120 can alternatively or additionally also be deployed as a Runtime Application. The Runtime services 240 includes the Deployment Management Module 110 and Deployment Verification Module 120. The operation of the modules 110 and 120 are as disclosed hereinabove.

The architecture 200 further includes Application and Device Management layer 250. The Application and Device Management layer 250 includes Edge management module 252, Cloud Management module 254, Application management module 256, Device management module 258 and deployment management module 110. Edge management module 252 manages connectivity within the automation network 155. Cloud management module 254 is responsible for connectivity with the cloud resources 190A and 190B via the Internet 180. The Application management module 256 manages deployment of the VCNs (VCN1, VCN2 and VCN3). The Device management module 258 manages the instructions sent to control the machines 130, 140 and 150.

The architecture 200 also includes an IT layer 270 and an OT layer 260. The OT layer 260 includes a debugging module 262 that manages debugging in relation to the controls sent to the industrial automation facility. The OT layer 260 also includes a service module 264 for configuration and support of the industrial automation facility. The IT layer 270 includes a Development module 272 that provides a development environment and/or tools for application development and tools. The IT layer 274 also includes a Services module 274 that is used for debugging and tracing operations of a platform enabling services remote monitoring of the industrial automation facility.

The present invention advantageously enables the open automation ecosystem by allowing multiple Original Equipment Manufacturers to provide machines 130, 140 and 150 with software defined functionality provided in the VCNs. The VCNs are deployed as containers in the Runtime Application module. Further, the present invention enables operators of the industrial automation facility to use the machines 130, 140 and 150 safely and efficiently. These advantages are achieved by using templates generated by the Deployment Management module 110. The templates define the deployment criteria of the VCNs for safe operation of the machines 130, 140 and 150.

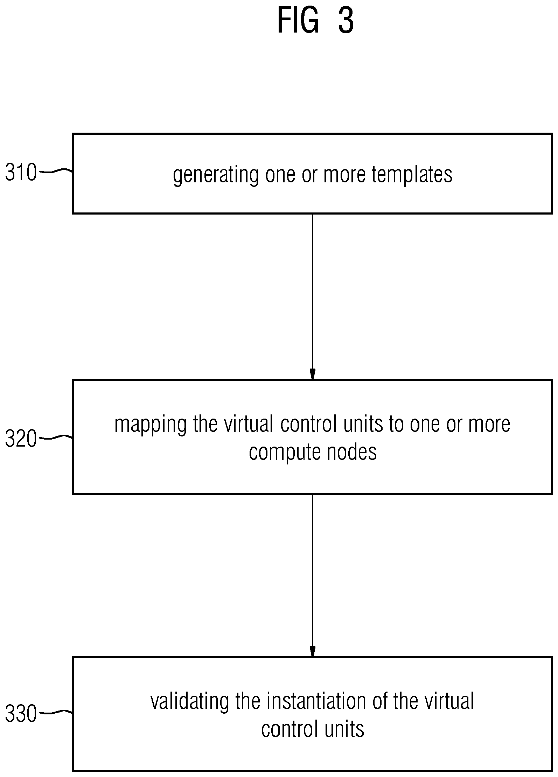

Fig. 3 illustrates a method for managing virtual control units in an industrial automation facility, according to an embodiment of the present invention.

The method includes three main steps. At step 310, templates for the deployment of the VCNs is generated. At step 320, the VCNs are mapped to compute nodes for execution. At step 330, the instantiation of the VCNs on the compute nodes is validated in accordance with the templates. The steps are elaborated hereinafter.

Step 310 includes generating one or more templates comprising one or more deployment criteria for the VCNs. The deployment criteria may provide class of compute nodes on which the VCNs are instantiated. Further, the deployment criteria may also include template data flows between the VCNs. The template specifies which VCN is linked to a machine and also provides criteria for which deployment of the VCN of the linked machine is permitted.

Step 320 includes mapping the VCNs to one or more compute nodes based on the deployment criteria, wherein the VCNs are instantiated on the mapped compute nodes when the controlled machines are in operation. The deployment criteria not only links the VCN to a machine also determines how and which compute nodes execute the VCN. Therefore, the supplier of the machine can ensure reliable operation of the machine by determining how the VCN linked to the machine is executed.

Step 310 may also include generating an integrated deployment template for the industrial process by merging the templates of the VCN1, VCN2 VCN3. The integrated deployment template specifies a global deployment criterion for the virtual control units on a common compute infrastructure 160A, 160B, 160C, 170, 190A and 190B. In an embodiment, the integrated deployment template may be generated using simulation. Step 310 may accordingly include simulating the templates of the virtual control units by testing the deployment criteria of each of the templates and determining the global deployment criteria using the simulation results. The templates are merged according to the global deployment criteria such that the deployment criteria in each of the templates is fulfilled. In addition, by satisfying the deployment criteria of each of the templates the industrial process is performable by the machines 130, 140 and 150.

Step 320 may also include balancing load on the mapped compute nodes based on the deployment criteria provided by the template. One method of balancing the load is by balancing the deployment of the VCNs across compute nodes based on the data sensitivity. In an embodiment, step 320 may include determining from the deployment criteria whether the VCNs are to be instantiated on local compute nodes in a local network within the industrial automation facility and/or external compute nodes in an external network and mapping the VCNs to the local compute nodes and/or external compute nodes based on the determination. Step 320 may further include balancing the load on the mapped compute nodes based on prioritization criteria provided in the template, wherein the load is adjusted between the local compute nodes and the external compute nodes based on the prioritization criteria.

Step 330 includes validating that the instantiation of the virtual control units is in accordance with the templates using an attestation. The attestation confirms one or more determined deployment parameters after deployment of the virtual control units. The machines 130, 140 and 150 perform the industrial process, according to control commands received from the VCN1, VCN2 and VCN3, when the VCNs are validly instantiated.

In an embodiment, step 330 may include determining data flows between the virtual control units by a network monitoring module; detecting at least one deviation in the data flows in comparison with template data flows provided in at least one of the templates and the integrated deployment template.

If the deployment parameters are not validated, the step 330 may further include generating an emergency halt signal to stop the plurality of machines from performing the industrial process in the industrial automation facility when the deviation is detected. The step 330 may also include determining that a machine of the machines 130, 140 and 150 is not permitted to operate when a virtual control unit controlling the machine is not instantiated in accordance with the template. Accordingly, the present invention recognizes that an incorrect deployment of a VCN result in incorrect functioning of the linked machine/s. If the linked machine is already in operation, then the emergency halt signal is used to stop operation. Otherwise, the machine is prevented from initializing. Therefore, the present invention maintains the integrity of the industrial process and ensures a safe industrial automation facility.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to system/device claims.

## Claims

1. A method of managing virtual control units (VCN1, VCN2, VCN3) in an industrial automation facility, wherein the industrial automation facility comprises a plurality of machines (130, 140, 150), each machine configured to perform one or more steps of at least one industrial process, the method comprising:
generating one or more templates comprising one or more deployment criteria for the virtual control units (VCN1, VCN2, VCN3), each of the virtual control units (VCN1, VCN2, VCN3) capable of controlling at least one of the plurality of machines (130, 140, 150);
mapping the virtual control units (VCN1, VCN2, VCN3) to one or more compute nodes (CN) based on the deployment criteria, wherein the virtual control units (VCN1, VCN2, VCN3) are instantiated on the mapped compute nodes (CN) when the controlled machines are in operation; and
validating that the instantiation of the virtual control units (VCN1, VCN2, VCN3) is in accordance with the templates using an attestation, wherein the attestation confirms one or more determined deployment parameters after deployment of the virtual control units (VCN1, VCN2, VCN3), wherein the plurality of machines (130, 140, 150) perform the industrial process, according to control commands received from at least one of the virtual control units (VCN1, VCN2, VCN3), when the virtual control units (VCN1, VCN2, VCN3) are validly instantiated.

2. The method according to claim 1, further comprising: balancing load on the mapped compute nodes (CN) based on the deployment criteria provided by the template.

3. The method according to one of claim 1 and claim 2, further comprising:
determining from the deployment criteria whether the virtual control units (VCN1, VCN2, VCN3) are to be instantiated on local compute nodes in a local network (155) within the industrial automation facility and/or external compute nodes in an external network (180)
mapping the virtual control units (VCN1, VCN2, VCN3) to the local compute nodes and/or external compute nodes based on the determination.

4. The method according to one of claim 2 and claim 3, further comprising:
balancing the load on the mapped compute nodes (CN) based on prioritization criteria provided in the template, wherein the load is adjusted between the local compute nodes and the external compute nodes based on the prioritization criteria.

5. The method according to one of claim 1 and claim 4, further comprises:
generating an integrated deployment template for the industrial process by merging the templates of at least two or more the virtual control units (VCN1, VCN2, VCN3), wherein the integrated deployment template specifies a global deployment criterion for the virtual control units (VCN1, VCN2, VCN3) on a common compute infrastructure (160A, 160B, 160C, 170, 190A and 190B), wherein the common compute infrastructure comprises at least one of the local compute nodes and the external compute nodes.

6. The method according to claim 5, wherein generating an integrated deployment template for the industrial process comprises:
simulating the templates of the virtual control units (VCN1, VCN2, VCN3) by testing the deployment criteria of each of the templates;
determining the global deployment criteria using the simulation results;
merging the templates according to the global deployment criteria, wherein the global deployment criteria ensures fulfillment of the deployment criteria in each of the templates.

7. The method according to one of claim 1 and claim 5, wherein validating that the instantiation of the virtual control units (VCN1, VCN2, VCN3) is in accordance with the template, further comprises:
determining data flows between the virtual control units (VCN1, VCN2, VCN3) by a network monitoring module;
detecting at least one deviation in the data flows in comparison with template data flows provided in at least one of the templates and the integrated deployment template.

8. The method according to claim 7, further comprising: generating an emergency halt signal to stop the plurality of machines (130, 140, 150) from performing the industrial process in the industrial automation facility when the deviation is detected.

9. The method according to one of claim 1, wherein validating that the instantiation of the virtual control units (VCN1, VCN2, VCN3) is in accordance with the template, further comprises:
determining that a machine of the plurality of machines (130, 140, 150) is not permitted to operate when a virtual control unit controlling the machine is not instantiated in accordance with the template.

10. The method according to claim 1, wherein validating that the instantiation of the virtual control units (VCN1, VCN2, VCN3) is in accordance with the template, further comprises: generating a production planning schedule for the plurality of machines (130, 140, 150) based on the attestation of the instantiation of the virtual control units (VCN1, VCN2, VCN3) .

11. A computer programmable product comprising instructions, when implemented by a processing unit performs the method claims 1-10.

12. A software artifact for managing virtual control units (VCN1, VCN2, VCN3) in an industrial automation facility, wherein the industrial automation facility comprises a plurality of machines (130, 140, 150) configured to perform at least one industrial process, and wherein the software artifact is implemented as the one or more templates according to at least one of claims 1-10, the templates comprising:
identifiers of the virtual control units (VCN1, VCN2, VCN3), wherein the virtual control units (VCN1, VCN2, VCN3) are capable of controlling the plurality of machines (130, 140, 150) or a subset of the plurality of machines (130, 140, 150); and
deployment criteria for the virtual control units (VCN1, VCN2, VCN3), wherein the virtual control units (VCN1, VCN2, VCN3) are instantiated on compute nodes (CN) when the plurality of machines (130, 140, 150) are in operation, and wherein each of the plurality of machines (130, 140, 150) perform one or more steps of the industrial process when the virtual control unit is validly instantiated in accordance with the template.

13. The software artifact according to claim 12, wherein the templates further comprise:
map of the virtual control units (VCN1, VCN2, VCN3) and associated compute node class, wherein the compute node class determines one or more compute nodes (CN) on which the virtual control units (VCN1, VCN2, VCN3) are instantiated, wherein the compute node class is defined based at least on location of the compute nodes (CN) and type of the compute nodes (CN); and
template data flows between the virtual control units (VCN1, VCN2, VCN3), wherein the template data flows are defined based on at least one of rate of data flow from the virtual control units (VCN1, VCN2, VCN3), real-time communication requests from the virtual control units (VCN1, VCN2, VCN3), and data packet parameters of data packets transmitted between the virtual control units (VCN1, VCN2, VCN3).

14. A system for managing virtual control units (VCN1, VCN2, VCN3) in an industrial automation facility, wherein the industrial automation facility comprises a plurality of machines (130, 140, 150), each machine configured to perform one or more steps of at least one industrial process, the system comprising:
one or more processing units communicatively coupled to one or more memory units comprising instructions executed by the processing units, the instructions stored in:
a template module (132, 142, 152) configured to generate at least one template comprising one or more deployment criteria of the virtual control units (VCN1, VCN2, VCN3) capable of controlling at least one of the plurality of machines (130, 140, 150);
a deployment manager module (110) configured to map the virtual control units (VCN1, VCN2, VCN3) to one or more compute nodes (CN), wherein the virtual control units (VCN1, VCN2, VCN3) are instantiated on the mapped compute nodes (CN) when the controlled machines are in operation; and
a deployment verification module (120) configured to validate that the instantiation of the virtual control units (VCN1, VCN2, VCN3) is in accordance with the template using an attestation, wherein the attestation confirms one or more deployment parameters after deployment of the virtual control units (VCN1, VCN2, VCN3) and wherein the plurality of machines (130, 140, 150) perform the industrial process when the virtual control units (VCN1, VCN2, VCN3) are validly instantiated.

15. A machine (130, 140, 150) in an industrial automation facility configured to perform an industrial process in collaboration with other machines in the industrial automation facility, wherein the machine comprises:
sensors (S) and actuators (A) that enable execution of one or more steps of the industrial process when the machine is in operation;
Input/Output (I/O) interfaces to communicate with the senor and actuators;
one or more memory units comprising instructions stored as modules, the memory units comprising a template module (132, 142, 152) configured to generate at least one template comprising one or more deployment criteria of a virtual control unit capable of controlling the machine, wherein the virtual control unit are instantiated on compute nodes (CN) based on the deployment criteria when the machine is in operation; and
a processing unit (134, 144, 154) to generate control signals that control the actuators when the virtual control unit associated with the machine is instantiated.
